# EUROPÄISCHE PATENTSCHRIFT

(11) **EP 1 277 409 B1**
(45) Veröffentlichungstag und Bekanntmachung des Hinweises auf die Patenterteilung: **19.07.2006**
(21) Anmeldenummer: 02014673.4
(22) Anmeldetag: 03.07.2002
(51) Int. Cl.: A23G 3/02, A23G 7/00, A23G 1/26, A23G 1/28, A23G 9/22

(54) **Verfahren und Vorrichtung zum kontinuierlichen Herstellen von gegossenen Süsswarenstücken ohne Stärkepuderform**
Process and apparatus for continuous fabrication of casted confection without starch-mould
Procédé et appareil pour la fabrication en continu de confiseries coulées sans moule à l'amidon

(30) Priorität: 18.07.2001 DE 10135074
(43) Veröffentlichungstag der Anmeldung: 22.01.2003
(73) Patentinhaber: Sollich KG, 32105 Bad Salzuflen (DE)
(72) Erfinder: Sollich, Thomas, 32689 Kalletal (DE)
(74) Vertreter: Rehberg Hüppe + Partner

(56) Entgegenhaltungen:
- DK-A- 64 586
- US-A- 3 857 252
- US-A- 3 940 218
- US-A- 4 669 278
- US-A- 4 819 449
- US-A- 5 591 464
- US-A- 5 680 923

## Beschreibung

Die Erfindung betrifft ein Verfahren zum kontinuierlichen Herstellen von puderlos gegossenen Süßwarenstücken mit den im Oberbegriff des Anspruchs 1 angegebenen Verfahrensschritten. Es wird auch eine zur Durchführung des Verfahrens geeignete Vorrichtung aufgezeigt.

Beim puderlosen Gießen von Süßwarenstücken wird eine Süßwarenmasse, beispielsweise Fondant, Gelee, Karamel, Toffee, Fudge etc., gekocht und in Formen aus Silikongummi oder aus mit Polytetrafluoräthylen oberflächlich behandeltem Aluminium gegossen. Die Formen sind zwar auswechselbar, ansonsten aber fest mit einem in der Regel Ketten aufweisenden und um horizontale Achsen kontinuierlich umlaufend angetriebenen Endlosförderer verbunden. Der Endlosförderer besitzt also einen oberen und einen unteren Trum. Im unteren Trum werden die Formen nach unten hängend gefördert. Der Endloser wird durch einen Kühltunnel geführt, wobei die Süßwarenmasse abgekühlt wird und sich verfestigt. Die so gebildeten Süßwarenstücke werden im Bereich des unteren Trums des Endlosers aus den Formen ausgeschlagen und von einem Austrageband aufgenommen sowie weiterverarbeitet. Die Weiterverarbeitung kann in einem Fördern und Verpacken bestehen. Dies gilt insbesondere für Hartbonbons. Die Weiterverarbeitung kann aber auch in einem Überziehen der Süßwarenstücke, insbesondere mit Schokolade oder einer Glasur oder dergleichen, mit anschließendem Fördern und Verpacken bestehen. Dies gilt insbesondere für Weichprodukte, wie Fruchtbonbons, Mintbonbons, Pralinen oder dergleichen.

Aus der Firmenschrift der Anmelderin "CANDYMASTER Die puderlosen Gießanlagen", Ausgabe 2/99, ist ein Verfahren und eine Vorrichtung zum kontinuierlichen Herstellen von puderlos gegossenen Süßwarenstücken bekannt. Die Süßwarenmasse wird in einer Kochanlage gekocht, über angeschlossene Transportleitungen zu einem Gießkopf geleitet und dort in Formen gegossen. Bei den Formen handelt es sich um von oben offene Vertiefungen, meist etwa halbkugelartiger Gestalt, die zu sogenannten Formenblöcken zusammengefaßt sind. Diese Formen oder Formenblöcke sind an einem Endloser befestigt, der um horizontale Achsen kontinuierlich umlaufend angetrieben wird. Im oberen Trum des Endlosers sind die Formen nach oben gerichtet, im unteren Trum nach unten. An die Gießstation schließt sich ein Kühltunnel an, durch den der Endloser mit einem großen Teil seiner Längserstreckung hindurchgeführt wird. Im Kühltunnel kühlen die flüssig vergossenen Süßwarenportionen in den Formen ab und verfestigen sich dabei. Im Bereich des unteren Trums des Endlosers ist eine Ausschlagstation gebildet. Jedes einzelne Produkt oder Süßwarenstück wird aus seiner Form bzw. Formvertiefung mechanisch ausgestoßen und gelangt auf ein Austrageband. Das Austrageband ist ebenfalls als Endloser ausgebildet und unterhalb des Endlosers angeordnet, der die Formen trägt. Für die Herstellung von nicht zu überziehenden Produkten, beispielsweise Hartbonbons, wird das Austrageband gleichsinnig mit dem die Formen tragenden Endloser angetrieben. Das Austrageband ist aus dem Ende des Kühltunnels herausgeführt, so dass dort die Süßwarenstücke entnommen und einer Weiterverarbeitung, insbesondere einer Verpackung, zugeführt werden können. Die so gebildete Anlage einschließlich der Verpackungsaggregate besitzt eine erhebliche Länge und erfordert eine entsprechend lange Fabrikationshalle.

Beim puderlosen Gießen von Weichprodukten, die nach dem Gießen beispielsweise mit Schokolade überzogen werden, beispielsweise Mintbonbons mit Schokoladeüberzug, ist eine Anlage bekannt, bei der das Austrageband gegensinnig zu dem die Formen tragenden Endloser angetrieben wird. Auch hier ist das Austrageband unterhalb des Endlosers angeordnet. Die gegossenen, noch nicht überzogenen Süßwarenstücke bewegen sich also in entgegengesetzter Richtung zu dem oberen Trum des Endlosers. Dabei müssen die Produkte den Bereich des Endlosers durchlaufen, der unterhalb der Gießstation vorgesehen ist. In diesem Bereich herrschen naturgemäß hohe Temperaturen, was für die Weiterverarbeitung der Produkte nachteilig ist. Die Produkte gelangen auf dem Austragsband oder einem Weiterführungsband in einen Bereich der Anlage, wo normalerweise die Kochmaschinen stehen und daher hohe Temperaturen und hohe Luftfeuchtigkeit herrschen, was der Qualität der Produkte ebenfalls abträglich ist. Um eine Überziehmaschine überhaupt aufstellen zu können, müssen die Kochmaschinen aus der Längsachse des Endlosers bzw. des Kühltunnels seitlich herausgerückt werden. Das Austrageband bzw. ein Weiterbeförderungsband muss die Produkte auf das Arbeitsniveau der Überziehmaschine anheben, wodurch die Baulänge der Anlage weiter verlängert wird. An die Überziehmaschine schließen sich dann die Verpackungsanlagen an, wodurch die Baulänge der gesamten Anlage nochmals vergrößert wird.

Die bekannten Maschinen und Anlagen für die Herstellung von puderlos gegossenen Süßwarenstücken weisen den weiteren Nachteil auf, dass insbesondere für das Austrageband eine schlechte Zugänglichkeit gegeben ist. Diese Bereiche der Anlagen müssen bei Betriebsschluss gereinigt, insbesondere gewaschen werden, um hygienische Bedingungen zu erfüllen. Auch das Austrageband besitzt ein oberes und ein unteres Trum, erfordert also entsprechende Bauhöhe, über dem wiederum der die formentragende Endlosförderer anzuordnen ist. Dieser Teil der Anlage baut deshalb relativ hoch. Wenn mit Schokolade zu überziehende Produkte hergestellt werden, müssen diese auf dem Austrageband eine vergleichsweise niedrigere Temperatur in der Größenordnung von etwa 25 °C aufweisen, während im Gießbereich des Endlosförderers Temperaturen bis zu 140 °C herrschen. Die in dem Kühltunnel gekühlten Produkte werden also am Ende des Kühlprozesses in nachteiliger Weise durch einen Bereich mit erhöhten Temperaturen geführt.

Aus der DE 24 11 093 A1 ist ein Verfahren und eine Vorrichtung zur Herstellung von einzelverpackten Süßwarenteilen bekannt. Auf einem umlaufenden Endlosförderer sind topfartige Gießformen angeordnet, in welche Hüllmaterialzuschnitte sowie eine oder mehrere Süßwarenmassen eingegossen werden. Nach dem Schließen des Hüllmaterialzuschnitts werden die fertig verpackten Süßwarenstücke einschließlich der Verpackung aus den Gießformen ausgeschlagen. Die Süßwarenstücke fallen auf ein Querförderband, welches unterhalb des unteren Trums des Endlosförderers angeordnet ist. Auf dem Querförderband werden die Süßwarenstücke in einer zumindest etwa horizontalen Ebene um etwa 90° umgelenkt und weiter gefördert. Eine Bearbeitung der Süßwarenstücke nach ihrem Herausfördern über das Querförderband ist nicht mehr möglich, da die Süßwarenstücke bereits einzeln verpackt sind und auch ansonsten die durch die Anordnung der Hohlformen vorgegebene Anordnung mit relativem Abstand zueinander nicht mehr aufweisen.

Aus der GB 12 61 729 ist ein Verfahren zur Herstellung von Süßwaren bekannt, die mit einem Extruder erzeugt und auf ein Förderband innerhalb einer Produktlinie abgegeben werden. Nach der Passage durch einen Kühltunnel werden die Süßwarenstücke geschnitten, von dem Förderband abgenommen und Packtischen zugeführt. Es ist auch möglich, an unterschiedlichen Stellen Süßwarenstücke von dem Förderband abzunehmen und parallel zu dem Förderband weiter zu fördern bzw. weiter zu verarbeiten, insbesondere zu überziehen oder mit anderen Produkten zusammenzubringen.

Aus der US 5,680,923 ist ein Kühltunnel mit variabler Aufnahmekapazität bekannt. Es wird ein Förderband in mehreren schlaufenförmigen Bewegungen durch den Kühltunnel geführt, auf dem die Gegenstände aufliegen. Der Endlosförderer wird um vertikale Achsen umlaufend angetrieben.

Aus der US 3,940,218 ist eine Vorrichtung zur Herstellung von Süßwaren bekannt, die aus mehreren unterschiedlichen Materialien zusammengesetzt sind. Es wird ein Endlosförderer, um horizontale Achsen angetrieben, benutzt, der an verschiedenen Füllstationen, Umklappstationen und auch durch einen Kühltunnelhindurchgeführt ist. Die Anlage besitzt ein Austrageband, welches unterhalb des Endlosförderers angeordnet und in der gleichen Richtung angetrieben wird wie der Endlosförderer.

Der Erfindung liegt die Aufgabe zugrunde, die geschilderten Nachteile zu vermeiden und ein Verfahren und eine Vorrichtung zum kontinuierlichen Herstellen von puderlos gegossenen Süßwarenstücken aufzuzeigen, die eine vergleichsweise kurze Baulänge der gesamten Anlage ermöglichen und mit denen chargenweise überzogene wie auch nicht überzogende Produkte herstellbar sind.

Erfindungsgemäß wird dies bei dem eingangs beschriebenen Verfahren dadurch erreicht, dass die Süßwarenstücke nach dem Ausschlagen in einer zumindest etwa horizontalen Ebene um etwa 180° seitlich umgelenkt und so parallel zu dem Kühltunnel weitergefördert und weiterverarbeitet werden.

Die Erfindung geht von dem Gedanken aus, die bisher in einer Längsachse aufgestellten Anlagenteile so aufzulösen, dass ein Teil der Anlagen seitlich neben dem anderen Teil der Anlagen plaziert werden kann, um die Gesamtlänge der Anlage auf Kosten der Breite zu verkürzen. Damit ergibt sich eine bessere Raumausnutzung und es entfällt die Notwendigkeit überlanger Fabrikhallen. Wesentliches Element hierbei ist die Umlenkung der ausgeschlagenen Süßwarenstücke um etwa 180°, um den parallel angeordneten Weiterverarbeitungszweig der Anlage zu erreichen. Mit dieser Umlenkung um 180° wird gleichzeitig die Förderrichtung der ausgeschlagenen Produktstücke umgekehrt und so vermieden, dass die Produktstücke unter dem heißen Bereich der Gießmaschine durchlaufen müssen. Auch die Zugänglichkeit der einzelnen Elemente der Anlage zu Wartungs- und Reinigungszwecken wird erheblich verbessert. Schließlich werden die Produkte von der Gießmaschine bis zur Verpackungsmaschine letztlich zum gleichen, der Kochanlage abgekehrten Ende der Anlage gefördert, gleichgültig ob es sich um überzogene oder um nicht überzogene Produkte handelt.

Die durch die Formen vorgegebene Anordnung der Süßwarenstücke wird auch bei der Umlenkung um 180° beibehalten. Dieser Verfahrensschritt ist besonders wichtig, wenn die ausgeschlagenen Süßwarenstücke überzogen werden sollen. Die Beibehaltung der Feldanordnung der Süßwarenstücke auf gegenseitigem Abstand verhindert eine Zwillingsbildung in der Überziehmaschine. Die Süßwarenstücke werden also erst nach der Umlenkung um 180° überzogen.

Bei der Vorrichtung zum kontinuierlichen Herstellen von puderlos gegossenen Süßwarenstücken wird eine Süßwarenmasse in einer Kochstation gekocht und in einer Gießstation in Formen gegossen. Die Formen sind an einem um horizontale Achsen kontinuierlich umlaufenden Endlosförderer angeordnet. Die in die Formen gegossenen Portionen der Süßwarenmasse werden in einem Kühltunnel gekühlt. Kontinuierlich abschließend werden die Süßwarenstücke im Bereich des Kühltunnels im unteren Trum des Endlosförderers in einer Ausschlagstation aus den Formen ausgeschlagen und von einem Austrageband aufgenommen sowie weiterverarbeitet, insbesondere überzogen. Erfindungsgemäß ist nach der Ausschlagstation ein die Bewegungsrichtung der Süßwarenstücke in einer zumindest etwa horizontalen Ebene um etwa 180° seitlich relativ zu dem Kühltunnel umlenkendes Umkehrband vorgesehen, an dessen Anfang das Austrageband anschließt. Endseitig auf dem Umkehrband werden die Süßwarenstücke in der gleichen Richtung, nur seitlich versetzt, wie auf dem oberen Trum des Endlosförderers und so parallel zu dem Kühltunnel weitergefördert und dann weiterverarbeitet.

Die Vorrichtung sieht zwei parallel seitlich nebeneinander angeordnete Anordnungsbereiche vor, in denen jeweils entsprechende Anlagenteile untergebracht sind. So stehen die Kochmaschinen, die Gießstation, der die formentragende Endlosförderer und der Kühltunnel in einer Linie. Die zweite dazu parallele Linie wird über das Umkehrband erreicht, welches die Umlenkung der ausgeschlagenen Süßwarenstücke um etwa 180° ermöglicht. Damit werden die Süßwarenstücke nach dem Umkehrband in der gleichen Richtung gefördert, die die über die Gießstation abgegebenen Portionen im oberen Trum des Endlosförderers einnehmen. Die im Kühltunnel gekühlten und ausgeschlagenen Produkte müssen nicht mehr unter dem heißen Bereich der Gießstation durchlaufen, so dass der Kühltunnel wirkungsvoller genutzt wird. Bei der Aufstellung der Elemente der Kochstation ergeben sich keine Schwierigkeiten. Diese Elemente können in Linie oder seitlich neben der durch die Gießstation und den Endlosförderer gebildeten Linie untergebracht werden. Die neue Vorrichtung stellt eine kompakte Anlage geringer Länge dar. Eine überlange Fabrikhalle wird vermieden und die einzelnen Stationen der Anlage werden besser zugänglich, so dass Wartungs- und Reinigungsarbeiten einfacher und mit größerer Sicherheit durchgeführt werden können. Die Erzeugungsrichtung der Produkte weist eine sinnfällige Ausrichtung auf. Dies wird durch die doppelte Umkehr der Bewegungsrichtung erreicht.

Im Bereich nach dem Umkehrband sollte eine Überziehmaschine vorgesehen sein. Es ergibt sich ohne weiteres die Möglichkeit, die Überziehmaschine in einem klimatisierten Raum aufzustellen. Der Überziehmaschine wird zweckmäßig ein weiterer Kühltunnel nachgeschaltet, durch den die überzogenen Süßwarenstücke, also die Produkte, der Packmaschine zugeleitet werden. Damit kann in sinnvoller Weise der den Endlosförderer aufnehmende Kühltunnel und der die überzogenen Süßwarenstücke abkühlende Kühltunnel nebeneinander platzsparend aufgestellt werden.

Unterhalb der Ausschlagstation kann parallel zu dem Kühltunnel ein in seiner Förderrichtung umkehrbares Förderband vorgesehen sein, dessen eines Ende an das Umkehrband anschließt und dessen anderes Ende gegenüber dem Kühltunnel vorsteht. Damit entsteht eine Kombianlage, mit der wahlweise bzw. chargenweise z.B. Hartbonbons oder überzogene Weichbonbons, Pralinen oder dergleichen hergestellt werden können.

Die Erfindung wird anhand bevorzugter Ausführungsbeispiele weiter erläutert und beschrieben. Es zeigen:
- Fig. 1: eine Draufsicht auf eine erste Ausführungsform der Gesamtanlage,
- Fig. 2: eine Seitenansicht der Produktionslinie zwischen Gießstation und Ausschlagstation, und
- Fig. 3: eine ähnliche Darstellung wie Fig. 1, jedoch bei einer abgewandelten Ausführungsform.

Die Herstellung puderlos gegossener Süßwarenstücke beginnt mit einer Kochstation 1, in der die Süßwarenmasse gekocht und gießfertig vorbereitet wird. Von der Kochstation 1 führt eine Leitung 2 zu einer Gießstation 3, die in bekannter Weise mit einem oder mehreren Gießköpfen ausgestattet ist. Es ist ein Endlosförderer 4, meist in Form eines Kettenförderbandes vorgesehen, der kontinuierlich umlaufend um horizontale Achsen 5 und 6 umlaufend angetrieben wird. Auf diese Weise besitzt der Endlosförderer 4 ein oberes Trum 7 und ein unteres Trum 8. Der Endlosförderer 4 wird so kontinuierlich angetrieben, dass sich sein oberes Trum 7 in Richtung des Pfeiles 9 bewegt. Der Endlosförderer 4 ist mit Formen 10 besetzt, die meist halbkugelartige Vertiefungen oder Näpfe aufweisen, in welche die gekochte flüssige Süßwarenmasse im Bereich der Gießstation eingegossen wird. Der Endlosförderer 4 mit seinen Formen 10 ist auf einem Großteil seiner Länge durch einen Kühltunnel 11 geführt, der als zweietagiger Kühltunnel ausgebildet ist, so dass die in die Formen 10 gegossenen Portionen der Süßwarenmasse im Kühltunnel 11 sowohl im oberen Trum 7 als auch im unteren Trum 8 gekühlt werden. Die Umkehr der Förderrichtung der Formen 10 vom oberen Trum 7 in das untere Trum 8 geschieht im Bereich der Achse 6, die an dem der Gießstation 3 abgekehrten Ende des Kühltunnels 11 untergebracht ist. Die Formen 10 bewegen sich im Bereich des unteren Trums 8 in hängender Relativlage entgegen der Bewegungsrichtung des Pfeiles 9.

Im Bereich des unteren Trums 8, meist noch innerhalb des Kühltunnels 11 ist eine Ausschlagstation 12 vorgesehen, in welcher die gegossenen und abgekühlten Süßwarenstücke mechanisch aus den Formen 10 ausgeschlagen werden. Die Süßwarenstücke 13 gelangen auf ein kurzes Ausformband 14, welches mit seinem oberen Trum in der gleichen Richtung angetrieben wird wie das untere Trum 8 des Endlosförderers 4. Dem Ausformband 14 ist ein Umkehrband 15 nachgeschaltet, welches zumindest in etwa in einer horizontalen Ebene angeordnet ist und die Süßwarenstücke 13 in einem Bogen von etwa 180° unter dem Kühltunnel 11 bzw. aus dem Kühltunnel 11 heraus seitlich neben den Kühltunnel 11 fördert, wie dies durch den Pfeil 16 angedeutet ist.

Während die bisher beschriebenen Elemente der Gesamtanlage von der Kochstation 1 bis zum Kühltunnel 11 mit der Ausschlagstation 12 und dem Ausformband 14 in einer Linie 17 angeordnet waren, wird durch das Umkehrband 15 die Möglichkeit geschaffen, weitere Elemente und Stationen der Gesamtanlage längs einer zur Linie 17 parallelen und seitlich versetzten Linie 18 anzuordnen. Dies betrifft insbesondere eine Überziehmaschine 19 mit nachgeschaltetem Kühltunnel 20. Da sich der untere Trum 8 des Endlosförderers 4 in relativ geringer Höhe befindet und die Süßwarenstücke 13 im Bereich des Umkehrbandes 15 auch nur bedingt angehoben werden können, ist in den meisten Fällen ein ansteigendes Band 21 erforderlich, welches der Überziehmaschine 19 vorgeschaltet ist, um so die Arbeitshöhe der Überziehmaschine 19 zu erreichen. Von der Überziehmaschine 19 führt ein Förderband 22 durch den Kühltunnel 20 hindurch, auf dem die überzogenen Süßwarenstücke den Kühltunnel 20 durchlaufen und so an eine meist mit mehreren Packstationen ausgestattete Packmaschine 23 gelangen.

Durch die Aufteilung der verschiedenen Elemente und Maschinen in den zwei beschriebenen Linien 17 und 18 erhält die Gesamtanlage, beginnend von der Kochstation 1 bis zur Packmaschine 23 eine relativ geringe Baulänge, so dass überlange Fabrikationshallen zur Aufstellung einer solchen Anlage nicht erforderlich sind. Das Umkehrband 15 eröffnet nicht nur die Anordnung der Elemente in den beiden Linien 17 und 18, sondern sorgt gleichzeitig dafür, dass die Produktion der Süßwarenstücke am einen Ende der Anlage beginnt und am anderen Ende der Anlage endet, also eine sinnfällige Herstellung und Förderung der Süßwarenstücke 13 erfolgt. Gleichzeitig vermeidet das Umkehrband 15, dass die Süßwarenstücke den heißen Bereich der Gießstation 3 durchlaufen müssen, nachdem sie in dem Kühltunnel 11 abgekühlt worden sind.

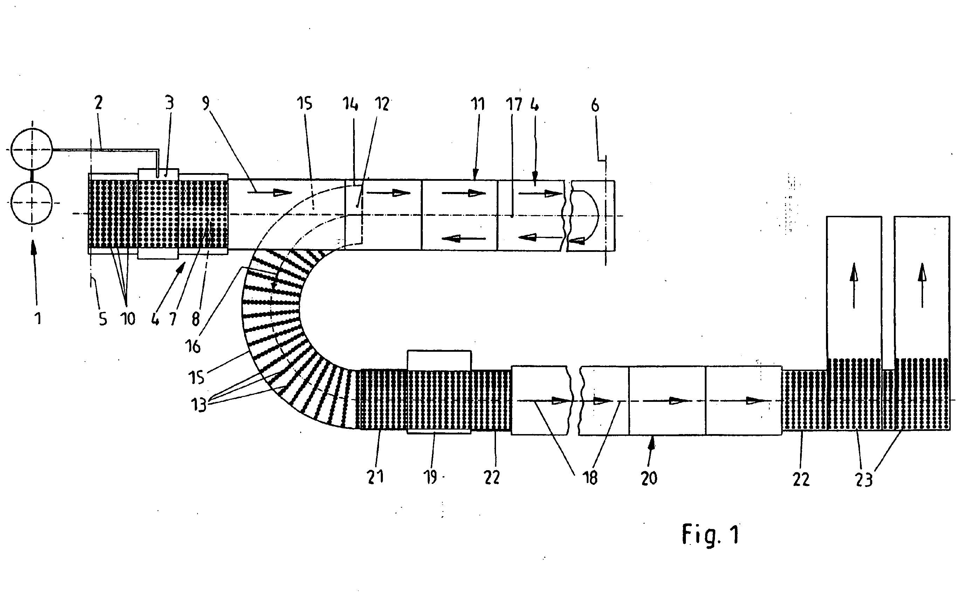

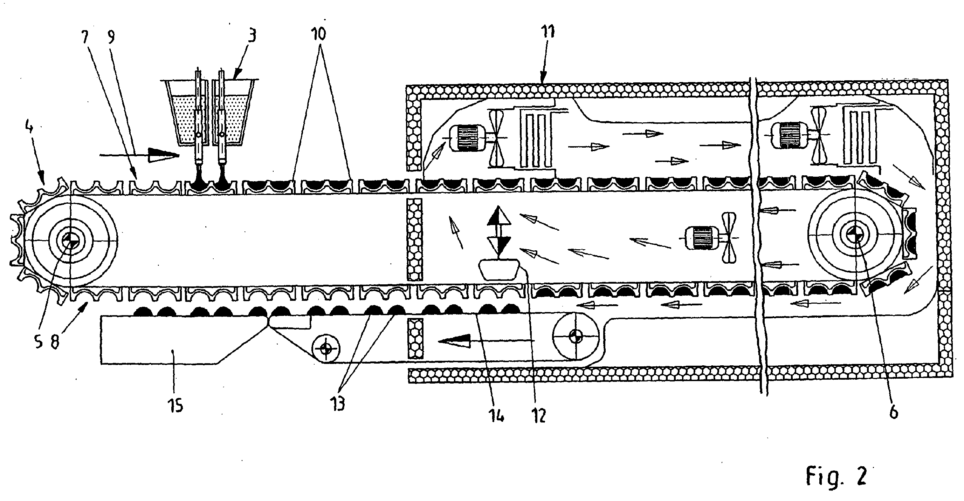

Die Anlage nach den Figuren 1 und 2 ist in gleicher Weise zur Herstellung überzogener Süßwarenstücke 13 wie auch nicht überzogener Süßwarenstücke 13 geeignet. In letzterem Fall wird lediglich die Überziehmaschine 19 nicht in Betrieb genommen bzw. die Süßwarenstücke durchlaufen die Überziehmaschine 19 ohne dass ein Überzug aufgebracht wird. Unter Umständen kann bei einer solchen Produktion auch der Kühltunnel 20 außer Funktion bleiben.

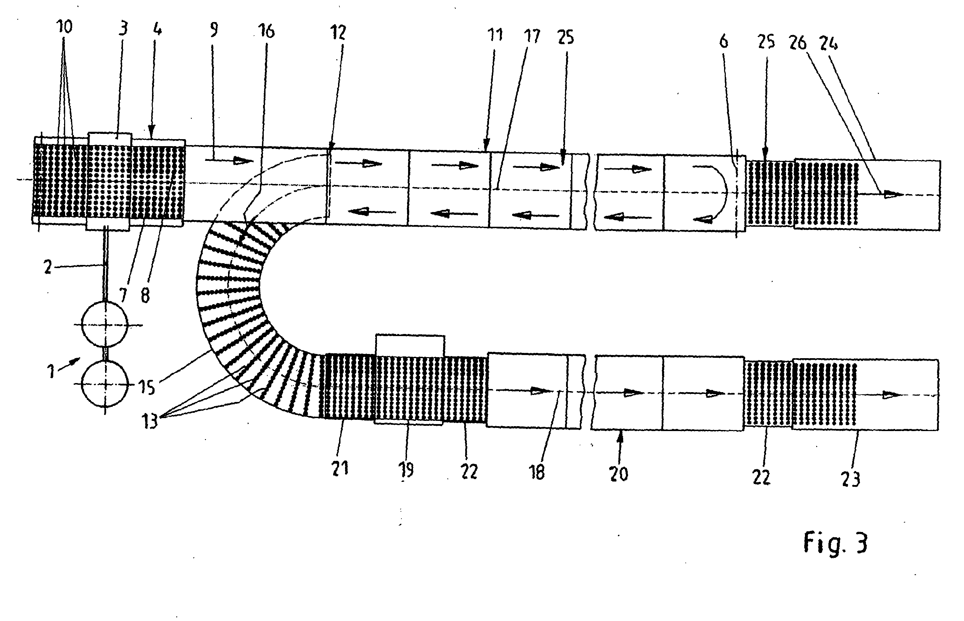

Die anhand der Fig. 3 verdeutlichte Anlage stimmt in weiten Bereichen mit der Anlage gemäß den Fig. 1 und 2 überein, weshalb hierauf verwiesen werden kann. Abweichend davon ist die Kochstation 1 hier jedoch seitlich zu der Gießstation 3, also gleichsam auch ausgerichtet zu der Linie 18 angeordnet, um die Baulänge der Gesamtanlage weiter zu kürzen. Ansonsten ist das kurze Ausformband 14 der Ausführungsform der Fig. 1 und 2 durch ein langes Austrageband 25 ersetzt, welches sich von der Ausschlagstation 12 bis über das der Gießstation 3 abgekehrte Ende des Kühltunnels 11 hinaus erstreckt. Dieses Austrageband 15 ist in seiner Antriebsrichtung umkehrbar gestaltet. Wenn es gemäß Pfeil 26 angetrieben wird, können nicht überzogene Süßwarenstücke der Packmaschine 24 zugeführt werden. Es versteht sich, dass bei dieser Produktion nicht überzogene Süßwarenstücke das Umkehrband 15 sowie die nachgeschalteten Elemente einschließlich der Überziehmaschine 19 und des Kühltunnels 20 außer Funktion sind. Wenn dagegen überzogene Süßwarenstücke hergestellt werden sollen, wird das Austrageband 25 entgegengesetzt zum Pfeils 26 angetrieben, so dass die in der Ausschlagstation 12 ausgeschlagenen Süßwarenstücke auf das Umkehrband 15 gelangen und dann so weiterverarbeitet werden, wie dies bereits an dem Ausführungsbeispiel der Fig. 1 und 2 beschrieben wurde. Die überzogenen Süßwarenstücke werden schließlich in der Packmaschine 23 verpackt. Es versteht sich, dass die Packmaschinen 23 und 24 auch kombiniert ausgebildet und angeordnet werden können, so dass sie sowohl für das Verpacken überzogener Warenstücke wie auch nicht überzogener Warenstücke gleichermaßen eingesetzt werden.

### BEZUGSZEICHENLISTE

| | |
|---|---|
| 1 - Kochstation | 11 - Kühltunnel |
| 2 - Leitung | 12 - Ausschlagstation |
| 3 - Gießstation | 13 - Süßwarenstück |
| 4 - Endlosförderer | 14 - Ausformband |
| 5 - Achse | 15 - Umkehrband |
| 6 - Achse | 16 - Pfeil |
| 7 - oberes Trum | 17 - Linie |
| 8 - unteres Trum | 18 - Linie |
| 9 - Pfeil | 19 - Überziehmaschine |
| 10 - Formen | 20 - Kühltunnel |
| | |
| 21 - Band | |
| 22 - Förderband | |
| 23 - Packmaschine | |
| 24 - Packmaschine | |
| 25 - Austrageband | |
| 26 - Pfeil | |

## Patentansprüche

1. Verfahren zum kontinuierlichen Herstellen von puderlos gegossenen Süßwarenstücken, bei dem eine Süßwarenmasse gekocht, in Formen (10) gegossen, die an einem um horizontale Achsen (5, 6) kontinuierlich umlaufenden Endlosförderer (4) angeordnet sind, und in einem Kühltunnel (11) gekühlt wird, die Süßwarenstücke (13) aus den Formen (10) ausgeschlagen und von einem Austrageband (14) aufgenommen sowie weiterverarbeitet, insbesondere überzogen, werden, **dadurch gekennzeichnet, dass** die Süßwarenstücke (13) nach dem Ausschlagen in einer zumindest etwa horizontalen Ebene um etwa 180° seitlich umgelenkt und so parallel zu dem Kühltunnel (11) weitergefördert und weiterverarbeitet werden.

2. Verfahren nach Anspruch 1, **dadurch gekennzeichnet, dass** die durch die Formen (10) vorgegebene Anordnung der Süßwarenstücke (13) auch bei der Umlenkung um 180° beibehalten wird.

3. Verfahren nach Anspruch 1 und 2, **dadurch gekennzeichnet, dass** die Süßwarenstücke (13) nach der Umlenkung um 180° überzogen werden.

4. Vorrichtung zum kontinuierlichen Herstellen von puderlos gegossenen Süßwarenstücken, bei dem eine Süßwarenmasse in einer Kochstation (1) gekocht, in einer Gießstation (3) in Formen (10) gegossen, die an einem um horizontale Achsen (5, 6) kontinuierlich umlaufenden Endlosförderer (4) angeordnet sind, und in einem Kühltunnel (11) gekühlt wird, die Süßwarenstücke (13) im Bereich des Kühltunnels (11) im unteren Trum (8) des Endlosförderers (4) in einer Ausschlagstation (12) aus den Formen (10) ausgeschlagen und von einem Austrageband (14) aufgenommen sowie weiterverarbeitet, insbesondere überzogen, werden, **dadurch gekennzeichnet, dass** nach der Ausschlagstation (12) ein die Bewegungsrichtung der Süßwarenstücke (13) in einer zumindest etwa horizontalen Ebene um etwa 180° seitlich relativ zu dem Kühltunnel (11) umlenkendes Umkehrband (15) vorgesehen ist, an dessen Anfang das Austrageband (14) anschließt, auf dem die Süßwarenstücke (13) in der gleichen Richtung, nur seitlich versetzt, wie auf dem oberen Trum (7) des Endlosförderers (4) und so parallel zu dem Kühltunnel (11) weiterbeförderbar und weiterverarbeitbar sind.

5. Vorrichtung nach Anspruch 4, **dadurch gekennzeichnet, dass** im Bereich nach dem Austrageband (14) und dem Umlenkband (15) eine Überziehmaschine (19) vorgesehen ist.

6. Vorrichtung nach Anspruch 5, **dadurch gekennzeichnet, dass** stromab der Überziehmaschine (19) ein weiterer Kühltunnel (20) vorgesehen ist.

7. Vorrichtung nach einem der Ansprüche 4 bis 6, **dadurch gekennzeichnet, dass** unterhalb der Ausschlagstation (12) parallel zu dem Kühltunnel (11) ein in seiner Förderrichtung umkehrbares Förderband (25) vorgesehen ist, dessen eines Ende an das Umkehrband (15) anschließt und dessen anderes Ende gegenüber dem Kühltunnel (11) vorsteht.

## Claims

1. Method for continuous fabrication of cast confection without starch-moulds, in which the confectionery mass is cooked and cast into moulds (10), the moulds being arranged on a continuously driven conveyor (4) running about horizontal axes (5, 6) and having an endless belt, the mass in the moulds being cooled in a cooling tunnel (11), the pieces (13) of confectionery are de-moulded from the moulds (10) and conveyed by a belt conveyor (14) and are further processed, especially enrobed, **characterized in that** the pieces (13) of confectionery after being de-moulded are turned in a U-turn of about 180° in an at least substantially horizontal plane and sideways conveyed in parallel to the cooling tunnel (11) and further processed.

2. Method of claim 1, **characterized in that** the arrangement of the pieces (13) predetermined by the moulds (10) is maintained during the U-turn about 180°.

3. Method of claim 1 and 2, **characterized in that** the pieces (13) after the U-turn about 180° are enrobed.

4. Apparatus for continuous fabrication of cast confection without starch-moulds, in which the confectionery mass is cooked in a cooking station (1) and cast into moulds (10) in a casting station (3), the moulds being arranged on a continuously driven conveyor (4) running about horizontal axes (5, 6) and having an endless belt, the mass in the moulds being cooled in a cooling tunnel (11), the pieces (13) of confectionery are de-moulded from the moulds (10) in a shaking out station (12) being located in the region of the cooling tunnel (11) with respect to the lower part (8) of the conveyor (4) and conveyed by a belt conveyor (14) and are further processed, especially enrobed, **characterized in that** a reverse conveyor (15) is arranged downstream the shaking out station (12), the reverse conveyor (15) turning the direction of the movement of the pieces (13) in a U-turn of about 180° in an at least substantially horizontal plane sideways with respect to the cooling tunnel (11), the belt conveyor (14) ending at the beginning of the reverse conveyor, the pieces (13) being conveyed in the same direction as on the upper part (7) of the conveyor (4) however with sideways distance and parallel to the cooling tunnel (11) and being able to be processed and further treated.

5. Apparatus of claim 4, **characterized in that** an enrobing machine (19) is arranged downstream the belt conveyor (14) and the reverse conveyor (15).

6. Apparatus of claim 5, **characterized in that** a further cooling tunnel (20) is arranged downstream the enrobing machine (19).

7. Apparatus of one of the claims 4 to 6, **characterized in that** a reversible conveyor (25) is located below the shaking out station (12) parallel to the cooling tunnel (11), the one end of the reversible conveyor (25) extending the cooling tunnel (11) and the other end having connection to the reverse conveyor (15).

## Revendications

1. Procédé de fabrication en continu de confiseries moulées sans poudre, dans lequel une pâte de confiserie est cuite, coulée dans des moules (10) qui sont agencés sur un transporteur sans fin (4) tournant en continu autour d'axes horizontaux (5, 6), et est refroidie dans un tunnel de refroidissement (11), les confiseries (13) sont décochées hors des moules (10) et sont reçues sur une bande d'évacuation (14) et soumises à un traitement ultérieur, en particulier enrobées, **caractérisé en ce que** les confiseries (13) après le décochage sont déviées latéralement sur environ 180° dans un plan au moins sensiblement horizontal et sont ainsi transportées parallèlement au tunnel de refroidissement (11) et soumises, à un traitement ultérieur.

2. Procédé selon la revendication 1, **caractérisé en ce que** l'agencement des confiseries (13), prédéfini par les moules (10), est aussi conservé lors de la déviation de 180°.

3. Procédé selon les revendications 1 et 2, **caractérisé en ce que** les confiseries (13) sont enrobées après la déviation de 180°.

4. Dispositif de fabrication en continu de confiseries moulées sans poudre, dans lequel une pâte de confiserie est cuite dans un poste de cuisson (1), puis, dans un poste de moulage (3), est coulée dans des moules (10) qui sont agencés sur un transporteur sans fin (4) tournant en continu autour d'axes horizontaux (5, 6), et est refroidie dans un tunnel de refroidissement (11), les confiseries (13) sont décochées hors des moules (10) dans un poste de décochage (12), dans la zone du tunnel de refroidissement (11) dans le brin inférieur (8) du transporteur continu (4), et sont reçues sur une bande d'évacuation (14) et soumises à un traitement ultérieur, en particulier enrobées, **caractérisé en ce que**, après le poste de décochage (12), il est prévu une bande de déviation (15), par laquelle la direction du mouvement des confiseries (13) dans un plan au moins sensiblement horizontal est déviée latéralement sur environ 180° par rapport au tunnel de refroidissement (11) et au début de laquelle est aboutée la bande d'évacuation (14), sur laquelle les confiseries (13) sont transportées dans la même direction, seulement décalées latéralement, comme sur le brin supérieur (7) du transporteur continu (4), et peuvent ainsi être transportées ainsi parallèlement au tunnel de refroidissement (11) et peuvent être soumises à un traitement ultérieur.

5. Dispositif selon la revendication 4, **caractérisé en ce qu'**une machine d'enrobage (19) est prévue dans la zone après la bande d'évacuation (14) et la bande de déviation (15) .

6. Dispositif selon la revendication 5, **caractérisé en ce qu'**un autre tunnel de refroidissement (20) est prévu en aval de la machine d'enrobage (19).

7. Dispositif selon l'une quelconque des revendications 4 à 6, **caractérisé en ce que**, en dessous du poste de décochage (12) parallèlement au tunnel de refroidissement (11), il est prévu une bande de transport (25), dont la direction de transport est réversible et dont une extrémité est aboutée à la bande de déviation (15) et l'autre extrémité est en saillie par rapport au tunnel de refroidissement (11).
